Europäisches Patentamt

European Patent Office

Office européen des brevets

(19)

(11) Veröffentlichungsnummer: **0 140 264**

**A2**

(12) # EUROPÄISCHE PATENTANMELDUNG

(21) Anmeldenummer: **84112362.3**

(22) Anmeldetag: **13.10.84**

(51) Int. Cl.⁴: **A 01 C 5/06**
**A 01 C 7/20**

(30) Priorität: **28.10.83 US 546607**

(43) Veröffentlichungstag der Anmeldung:
**08.05.85 Patentblatt 85/19**

(84) Benannte Vertragsstaaten:
**DE FR GB**

(71) Anmelder: **DEERE & COMPANY**
**1 John Deere Road**
**Moline Illinois 61265(US)**

(72) Erfinder: **Clark, Richard Hugo**
**614 Terrace Dr.**
**Blue Grass Iowa 52726(US)**

(74) Vertreter: **Sartorius, Peter**
**DEERE & COMPANY European Office, Patent**
**Department Postfach 503 Steubenstrasse 36-42**
**D-6800 Mannheim 1(DE)**

(54) **Sävorrichtung.**

(57) Das Saatrohr (32) einer Sämaschine ist zwischen den vorderen aneinander angrenzenden Kanten von zwei nebeneinander V-förmig angeordneten Scheibenscharen (20) und den sich schneidenden, die Scheibenschare aufnehmenden Achsen (21) angeordnet, damit das Saatgut an einer Stelle in die Furche abgelegt werden kann, die so eng ist, daß das Saatgut (50) nicht hochspringen bzw. weiterrollen kann, sobald es in die Furche abgelegt worden ist.

Fig. 2

## Sävorrichtung

Die Erfindung bezieht sich auf eine Sävorrichtung für eine Sämaschine mit einem an einem Rahmen der Sävorrichtung angeordneten, zwei nebeneinanderliegende Scheibenschare aufweisenden Furchenöffner, wobei die Scheibenschare auf sich schneidenden Achsen derart angeordnet sind, daß sie nach oben und hinten divergierend verlaufen und zwischen sich ein Saatrohr aufnehmen.

Es ist eine Sävorrichtung der eingangs aufgeführten Art bekannt, die eine Furchenöffnungsvorrichtung mit zwei nebeneinander angeordneten, V-förmig zueinander ausgerichteten Scheibenscharen aufweist, die auf sich schneidenden Achsen drehbar gelagert sind. Ein Saatrohr der Sävorrichtung, das zum Ablegen von Saatgut in einer Furche dient, ist zwischen den beiden sich schneidenden Achsen der Scheibenschare und ihren äußeren hinteren Enden angeordnet (US-A-4 009 668). Da das untere Ende des Saatrohres außerdem noch nach hinten abgebogen ist, wird das Saatgut in die Furche an einer Stelle abgegeben, die relativ breit zu dem Teil der Furche ist, der im Bereich der äußersten unteren Stelle der Scheibenschare gebildet wird. Dadurch besteht leicht die Möglichkeit, daß abgelegtes Saatgut nicht liegenbleibt, sondern entweder wieder hochspringt oder nach hinten weiterläuft, so daß ein gleichmäßiger Abstand nicht gewährleistet ist.

Demgegenüber liegt der Erfindung die Aufgabe zugrunde, die Sävorrichtung bzw. das zugehörige Saatrohr derart auszubilden und anzuordnen, daß eine einwandfreie Abgabe des Saatgutes in die Furche möglich ist, ohne daß nach Ablage des Saatgutes eine Weiterbewegung des Saatgutes erfolgt. Diese Aufgabe ist dadurch gelöst worden, daß das Saatrohr sich zwischen den vorderen in etwa aneinander angrenzenden Kanten der Scheibenschare und den Achsen der Scheibenschare erstreckt und sein Austragende sich in die Nähe der unteren äußeren Teile der Scheibenschare unmittelbar hinter den Achsen erstreckt. Durch die vorteilhafte Anordnung und Führung des Saatrohres wird das Saatgut an einer Stelle in der Furche abgelegt, die relativ eng ist, so daß ein Hochspringen bzw. Weiterrollen des Saatgutes ausgeschlossen ist, da infolge der relativ eng zueinander ausgerichteten Seitenwände der Furche zwischen dem Saatgut und der Seitenwand ein Reibungswiderstand erzeugt wird, der eine Weiterbewegung des Saatgutes verhindert. Hierzu ist es gemäß der Erfindung vorteilhaft, daß an dem Rahmen der Sävorrichtung im Bereich des Austragendes des Saatrohres eine vordere Distanzstrebe angeordnet ist, die zwischen den aneinander angrenzenden Kanten der Scheibenschare und den sich schneidenden Achsen der Scheibenschare vorgesehen ist, und daß die vordere Distanzstrebe sich seitlich bzw. horizontal in den Bereich der sich gegenüberliegenden Seitenflächen der Scheibenschare erstreckende Flansche aufweist. Ferner ist es vorteilhaft, daß an dem Rahmen im Bereich des Austragendes des Saatrohres eine hintere Distanzstrebe angeordnet ist, die hinter den sich schneidenden Achsen der Scheibenschare vorgesehen ist, und daß die hintere Distanzstrebe sich seitlich bzw. horizontal in den Bereich der sich gegenüberliegenden Seitenflächen der Scheibenschare erstreckende Flansche aufweist. Die Verwendung von Distanzstreben gestattet eine exakte Führung und Ausrichtung der Scheibenschare, und gleichzeitig können sie dazu beitragen, das an der Oberfläche haftende Erdgut von den Scheibenscharen wieder zu entfernen, da die zugehörigen Flansche der Distanzstreben an den Seitenflächen der Scheibenschare anliegen. Ferner ist es vorteilhaft, daß das Austragende des Saatrohres zwischen der vorderen und der hinteren Distanzstrebe angeordnet ist. Durch die Plazierung des Saatrohres zwischen den Distanzstreben wird eine gute und einfache Halterung für das untere Ende des Saatrohres geschaffen, und gleichzeitig wird ermöglicht, das Saatrohr in dem Bereich enden zu lassen, in dem durch die Scheibenschare die gebildete Furche noch am engsten ist.

Im folgenden wird die Erfindung anhand von lediglich einen
Ausführungsweg darstellenden Zeichnungen näher erläutert.
Es zeigt:

Fig. 1  eine perspektivische Darstellung einer
        Sävorrichtung, wobei ein Teil der Sävorrichtung zur besseren Darstellung des
        Säorganes weggeschnitten ist,

Fig. 2  eine Seitenansicht der Sävorrichtung entlang der Linie 2 - 2 gemäß Fig. 1, wobei
        die Stellung des Saatrohres und des unteren Abgabeendes des Saatrohres mit Bezug auf die Achse der Scheibenschare dargestellt ist,

Fig. 3  eine Draufsicht entlang der Linie 3 - 3
        gemäß Fig. 2, wobei Teile der Scheibenschare weggeschnitten sind, um den Anschluß der Scheibenschare an den Rahmen
        zu verdeutlichen,

Fig. 4  den unteren Teil der Scheibenschare mit
        dem Austragende des Saatrohres,

Fig. 5  eine Schnittdarstellung entlang der Linie 5 - 5 gemäß Fig. 2 sowie die gebildete Furche im Bereich der Stelle b, wo
        das Saatgut abgelegt wird.

In der Zeichnung ist mit 10 eine Sävorrichtung bezeichnet,
die parallel verlaufende Lenker 12 aufweist, die einen
Rahmen 14 der Sävorrichtung 10 mit dem Hauptrahmen der in
der Zeichnung der Einfachheit halber nicht dargestellten
Sämaschine vertikal schwenkbar verbinden. Mittels der parallel verlaufenden Lenker kann jede einzelne Sävorrichtung
gegenüber der benachbarten Sävorrichtung vertikal verstellt
werden.

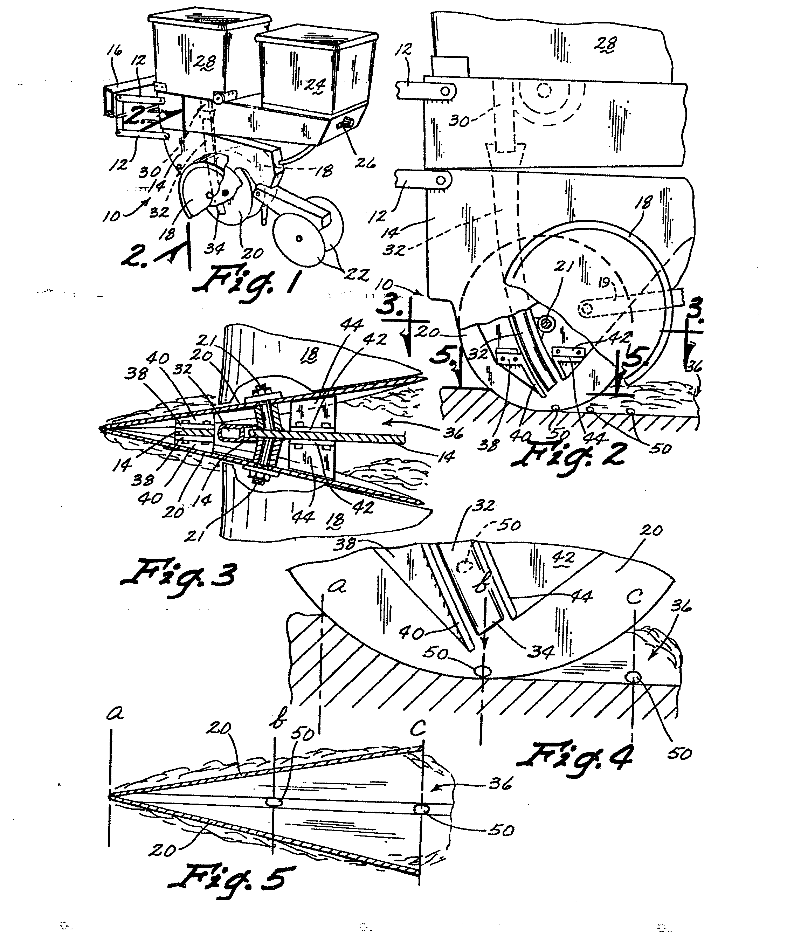

Der Rahmen 14 stützt sich über zwei einstellbare Bodenräder 18 auf dem Boden ab, mittels derer die Tiefe der
Furchenöffner bzw. der Scheibenschare 20 bestimmt wird.
Hierzu sind entsprechende Stellarme 19 vorgesehen (Fig. 2).
Zwei nebeneinander angeordnete Scheibenschare 22 bilden
die Zudeckvorrichtung und sind hierzu über einen Träger an
den Rahmen 14 verstellbar angeschlossen. Die Scheibenschare 22 wirken auf die Oberfläche und seitlich auf die Furche, so daß diese mittels der Scheibenschare zugedeckt
wird und somit das Saatgut abdeckt.

Der obere Teil des Rahmens 14 weist einen Sammelbehälter 24
für Düngemittel mit einer Dosierungsvorrichtung 26 sowie
einen Sammelbehälter 28 für Saatgut mit einer Dosierungsvorrichtung 30 auf. Beide Dosierungsvorrichtungen 26 und
30 werden gemeinsam über eine in der Zeichnung nicht dargestellte Hauptantriebsvorrichtung angetrieben. Die Dosierungsvorrichtung 30 wird über die Hauptantriebsvorrichtung angetrieben, um den Ausstoß des Saatgutes aus dem
Sammelbehälter 28 zu steuern, so daß es aus dem Sammelbehälter 28 über ein Saatrohr 32 und dessen Austragende 34
in eine Furche 36 gelangt (Fig. 2).

Wie aus Fig. 3 hervorgeht, sind die Scheibenschare 20 zur
Öffnung der Furchen auf je einer Achse 21 drehbar gelagert, wobei die beiden Achsen konvergierend zueinander
angeordnet sind, so daß sich ihre Achsen untereinander
schneiden. Die Scheibenschare laufen nach hinten und oben
auseinander und erhalten somit eine V-förmige Anordnung
gemäß der Schnittdarstellung in Fig. 5. Eine vordere Distanzstrebe 38 weist sich seitlich erstreckende Flansche
40 auf, die an dem Rahmen 14 angeschlossen sind und unmittelbar vor den sich schneidenden Achsen 21 der Scheibenschare 20 liegen. Dabei grenzen die Flansche 40 an
die sich gegenüberliegenden Stirnflächen der Scheibenschare 20 an. Eine hintere Distanzstrebe 42 ist hinter den
Achsen 21 der Scheibenschare 20 an den Rahmen 14 angeschlossen. Die Distanzstrebe 42 weist sich seitlich erstreckende Platten 44 auf, die zwischen den gegenüberliegenden Stirnseiten der Scheibenschare 20 liegen. Die Distanzstrebe 38 und die Distanzstrebe 42 dienen als Kratzelemente und verhindern dadurch, daß Erdreich sich an den Innenseiten der Scheibenschare 20 festsetzt. Ferner verhindern sie, daß sich die Scheibenschare 20 verstellen bzw. verbiegen, wenn in besonders hartem Erdreich gearbeitet wird.

Wie aus den Figuren 2 bis 4 hervorgeht, ist das Saatrohr 32 nach unten und hinten abgebogen, so daß dem Saatgut 50 beim Verlassen des Saatrohres 32 ein Beschleunigungsimpuls nach hinten verliehen wird. Die nach hinten gerichtete Geschwindigkeitskomponente des Saatgutes 50 kompensiert die Fahrtgeschwindigkeit der Sävorrichtung, so daß dem Saatgut 50 mit Bezug auf den Boden eine Relativgeschwindigkeit vermittelt wird. Das Saatgut wird an einer Stelle unmittelbar unter und hinter dem Ausgang des Austragendes 34 des Saatrohres 32 in die Furche 36 abgelegt. Wie am besten aus den Figuren 2 und 3 hervorgeht, erstreckt sich das Saatrohr 32 nach unten unterhalb der sich schneidenden Achsen 21 der Scheibenschare 20, wobei das Austragende 34 des Saatrohres 32 etwas hinter den Achsen 21 der Scheibenschare 20 liegt. Wie aus Fig. 2 hervorgeht, erstreckt sich dabei das Saatrohr 32 zwischen der Distanzstrebe 38 und der Distanzstrebe 42.

Eine präzise Ablage des Saatgutes 50 in der Furche 36 ergibt sich aus den Figuren 4 und 5. Das über das Austragende 34 des Saatrohres 32 heraustretende Erntegut 50 fällt gemäß Pfeilrichtung in die Furche, wobei die effektive Geschwindigkeitskomponente annähernd null ist. Somit gelangt das Saatgut 50 unmittelbar unter dem Austragende 34 an einer Stelle b in die Furche. Die Stelle b liegt etwas hinter der Schnittstelle der Achsen 21, und zwar da, wo die Furche 36 ihre maximale Tiefe aufweist. Wie aus den

Figuren 4 und 5 hervorgeht, ist die Furche an der Stelle b verhältnismäßig eng und weist relativ vertikal verlaufende Seitenwände auf. Die Ablage des Saatgutes 50 an der Stelle b verhindert ein Springen und Rollen des Saatgutes in dem Augenblick der Abgabe, da das zwischen den relativ steilen Seitenwänden eingegebene Saatgut infolge der relativ steilen Seitenwände der Furche nicht hochspringen bzw. weiterrollen kann, weil die Seitenwände einen entsprechenden Reibungswiderstand hervorrufen. Aus den Figuren 4 und 5 geht ferner hervor, daß die Abgabe des Saatgutes 50 zwischen den Punkten a und b so lange nicht erwünscht ist, bis die Furche 36 ihre maximale Tiefe erreicht hat. Eine Abgabe des Saatgutes 50 zwischen den Punkten b und c führt zum vermehrten Aufspringen bzw. Weiterrollen des Saatgutes, da die Furche 36 in Richtung c zunehmend weiter wird und die Seitenwände der Furche 36 zunehmend flacher ausgebildet sind. Eine genaue Ausrichtung des Saatrohres 32 führt zu einer genauen Abgabe des Saatgutes 50 in der Furche 36 und gewährleistet somit, daß das Saatgut nicht springt bzw. weiterrollt. Hierdurch wird eine optimale Ablage und somit ein optimales Keimen des Saatgutes gewährleistet.

Patentansprüche

1. Sävorrichtung (10) für eine Sämaschine mit einem an einem Rahmen (14) der Sävorrichtung (10) angeordneten, zwei nebeneinanderliegende Scheibenschare (20) aufweisenden Furchenöffner, wobei die Scheibenschare (20) auf sich schneidenden Achsen (21) derart angeordnet sind, daß sie nach oben und hinten divergierend verlaufen und zwischen sich ein Saatrohr (32) aufnehmen, dadurch gekennzeichnet, daß das Saatrohr (32) sich zwischen den vorderen in etwa aneinander angrenzenden Kanten der Scheibenschare (20) und den Achsen (21) der Scheibenschare (20) erstreckt und sein Austragende (34) sich in die Nähe der unteren äußeren Teile der Scheibenschare (20) unmittelbar hinter den Achsen (21) erstreckt.

2. Sävorrichtung nach Anspruch 1, dadurch gekennzeichnet, daß an dem Rahmen (14) der Sävorrichtung (10) im Bereich des Austragendes (34) des Saatrohres (32) eine vordere Distanzstrebe (38) angeordnet ist, die zwischen den aneinander angrenzenden Kanten der Scheibenschare (20) und den sich schneidenden Achsen (21) der Scheibenschare (20) vorgesehen ist.

3. Sävorrichtung nach Anspruch 2, dadurch gekennzeichnet, daß die vordere Distanzstrebe (38) sich seitlich bzw. horizontal in den Bereich der sich gegenüberliegenden Seitenflächen der Scheibenschare (20) erstreckende Flansche (40) aufweist.

4. Sävorrichtung nach den Ansprüchen 1 bis 3, dadurch gekennzeichnet, daß an dem Rahmen (14) im Bereich des Austragendes (34) des Saatrohres (32) eine hintere Distanzstrebe (42) angeordnet ist, die hinter den sich schneidenden Achsen (21) der Scheibenschare (20) vorgesehen ist.

5. Sävorrichtung nach Anspruch 4, dadurch gekennzeichnet, daß die hintere Distanzstrebe (42) sich seitlich bzw. horizontal in den Bereich der sich gegenüberliegenden Seitenflächen der Scheibenschare (20) erstreckende Flansche (44) aufweist.

6. Sävorrichtung nach den Ansprüchen 3 und 5, dadurch gekennzeichnet, daß die Flansche (40, 44) der Distanzstreben (38, 42) an den Seitenflächen der Scheibenschare (20) anliegen.

7. Sävorrichtung nach einem oder mehreren der vorherigen Ansprüche, dadurch gekennzeichnet, daß das Austragende (34) des Saatrohres (32) zwischen der vorderen und der hinteren Distanzstrebe (38, 42) angeordnet ist.

0140264

Fig. 1

Fig. 2

Fig. 3

Fig. 4

Fig. 5